# EUROPEAN PATENT SPECIFICATION

(11) **EP 2 636 514 B1**
(45) Date of publication and mention of the grant of the patent: **29.04.2020**
(21) Application number: 12158475.9
(22) Date of filing: 07.03.2012
(51) Int. Cl.: B29C 70/08, B29C 70/86, B29D 99/00, B64C 1/40, G10K 11/168, B32B 3/12, B32B 5/24, B32B 5/28, B32B 7/02, B32B 25/10, B32B 25/14, B32B 27/30, B32B 3/20, B64C 1/00, B29L 31/60, B32B 5/02, B64C 1/06, B29K 623/00

(54) **Sandwich component**
Verbundkomponente
Composant de sandwich

(43) Date of publication of application: 11.09.2013
(73) Proprietor: Airbus Operations GmbH, 21129 Hamburg (DE)
(72) Inventor: Preuß, Tobias, 52070 Aachen (DE); Winkelmann, Lionel, 52062 Aachen (DE); Turanski, Peter, 27305 Süstedt (DE); Altpeter, Hanno, 28209 Bremen (DE); Hesse, Karsten, 28209 Bremen (DE)
(74) Representative: Bird & Bird LLP

(56) References cited:
- WO-A2-98/14368
- FR-A1- 2 939 406
- US-A1- 2006 208 135
- US-A1- 2010 170 746
- US-B1- 6 764 754

## Description

The present invention relates to sandwich components, such as in particular structural sandwich components, comprising a core layer and two cover layers between which the core layer is disposed.

Such sandwich components, which often take the form of panels or structural panels and are then also referred to as sandwich panels, are composite components which include or consist of a sandwich structure and which are able to provide the advantage of having a high stiffness and structural strength in combination with a low weight. In order to achieve this advantage the core layer is chosen to be lightweight while still maintaining sufficient compression stiffness and shear rigidity. For example, the core layer may be made from a material or materials more lightweight than the material or materials of the cover layers. In addition or in the alternative a honeycomb structure or honeycomb-like structure may be chosen for the core layer. Such honeycomb or honeycomb-like structure comprises a plurality of open cells or voids separated by walls, thereby reducing weight. The cover layers, which are also referred to as face sheets or skins, are typically of less thickness than the core layer and may be made from materials such as, e.g., metals or metal alloys, plastic materials or, preferably, fiber-reinforced plastic materials. During the use of the sandwich components they bear most of the compressive and tensile stresses.

The cover layers are attached or laminated to the two opposite extended surfaces of the core layer either directly or with one or more additional layers disposed between them and the core layer. The attachment of the layers of the sandwich or layered or laminated structure to each other may be effected by, for example, adhesive bonding.

Due to the mentioned particular property of having a high stiffness, a high rigidity and a high structural strength in combination with a low weight sandwich components are utilized in many different technical fields, including vehicle and building construction. One particular field of application is aircraft and aerospace vehicles in which sandwich components, such as structural sandwich components, are used, e.g., as fuselage panels and as panels for the interior fittings or wall cladding of the aircraft, such as the cabin walls or partition walls in the cabin. In the latter cases, the sandwich components are attached to the inside of the aircraft fuselage.

In these applications core layers are often used having a honeycomb structure. Consequently, the two surfaces of these core layers are constituted or at least in part constituted by the edges or terminal ends of walls or strips of material defining the honeycomb structure, and openings are present in the two surfaces between the ridges or lands of material formed by these edges or terminal ends.

As compared to metals, when using sandwich components it has to be taken into consideration that these components tend to have a low vibration absorptivity, so that vibrations and structure-borne noise may be transmitted through them with low attenuation. Thus, in the case of, for example, their use in cabin walls or partition walls of cabins in aircrafts vibrations originating from the primary fuselage structure of the aircraft may be transmitted into the interior of the cabin to an extent that a high noise level is created inside the cabin which is annoying to the passengers and the crew.

For this reason and other reasons, vibration damping layers typically comprising a viscoelastic material, such as an elastomeric material, have been included in the sandwich structures used and have been disposed between the core layer and one or both of the cover layers. Such vibration damping layers convert a portion of the vibration energy into heat. Examples of a sandwich structure including an elastomeric layer can be found in EP 0 038 091 and WO 2010/79322 A1.

Document FR 2 939 406 A1 relates to a sound absorbing panel comprising a soft core and two skins. The panel as a whole is an integral, self-contained component. This component is manufactured by a process, such that the component (and its two skins) is only generated after a heating and cooling step carried out subsequent to arranging a soft core and a plurality of different layers one on top of the other. A resulting layered arrangement may constitute a sandwich component.

Document WO 98/14368 A2 relates to a panel comprising a first constraining layer and a second constraining layer. A viscoelastic damping material is disposed between the first constraining layer and the second constraining layer. The first constraining layer and the second constraining layer comprise a honeycomb composite.

While the use of vibration damping layers may provide for significant improvements in the general vibration absorptivity of sandwich components it has been found that great care must be taken when manufacturing sandwich components in order to indeed achieve the desired improvements, and that the vibration absorptivity of the sandwich components may decrease during use.

It is the object of the present invention to provide a sandwich component which exhibits a high vibration absorptivity that is stable over time without substantially impairing the mechanical properties of the sandwich component during use, and to provide a method for producing such a sandwich component, which method is simple to carry out and reliably achieves the desired results.

This object is achieved by a sandwich component having the features of claim 1 and by a method having the features of claim 12. Preferred embodiments of the invention are the subject-matter of the respective dependent claims.

Accordingly, a sandwich component, and in a preferred embodiment a structural sandwich component, is provided which comprises two cover layers and a core layer disposed between the two cover layers as described generally above. Preferably, the cover layers extend parallel or essentially parallel with respect to each other, but they may also have a different relative orientation. Each of the two cover layers and the core layer may consist of only one layer or may comprise multiple layers or sublayers. The two cover layers may be of the same or different construction and may comprise the same or different materials. Thus, the sandwich component can be adapted to various particular applications.

The core layer comprises a plurality of hollow cells or voids, which are separated by walls. These hollow cells or voids extend in the thickness direction of the core layer, preferably perpendicularly or essentially perpendicularly to one or both of the two opposing extended surfaces of the core layer. Typically, the walls have a thickness which is smaller than the diameter of the hollow cells or voids in the direction perpendicular to the thickness direction of the core layer. Further, each of these cells or voids form an opening in one or both of the two opposing extended surfaces of the core layer facing the cover layers. Evidently, each cell or void forming an opening in both opposing surfaces of the core layer extends throughout the entire thickness of the core layer. It is to be noted that the hollow cells or voids of the core layer may be empty or may be filled with a material in order to influence a characteristic of the core layer or the entire sandwich component. Further, it is to be noted that in addition to the mentioned hollow cells or voids the core layer may also comprise additional hollow cells or voids which do not form an opening in one of the two opposing surfaces of the core layer.

Due to the above construction, each of the two opposing surfaces of the core layer or at least a portion thereof is formed or constituted by the edges or terminal ends of such walls. In other words, the two surfaces, or at least a portion thereof, are constituted by lands or ridges between the openings formed by the hollow cells or voids, as in the case of a honeycomb structure. The walls may be constructed from strips or webs of a suitable material.

A particular, preferred example for such structures are honeycomb or honeycomb-like structures, for which the cells or voids typically take the form of tubular cells or voids extending in the thickness direction of the core layer, preferably throughout the entire thickness of the core layer between its two opposing surfaces. A honeycomb structure may be regular or irregular with respect to the cell sizes and shapes and may, e.g., be a hexagonal honeycomb structure or a non-hexagonal honeycomb structure, such as a rectangular honeycomb structure.

The sandwich component further comprises one or more viscoelastic layers, such as one or more elastomeric layers, of which each is disposed between the core layer and one of the cover layers. In other words, one viscoelastic layer or more viscoelastic layers are disposed between the core layer and one of the cover layers and/or one viscoelastic layer or more viscoelastic layers are disposed between the core layer and the other of the cover layers. Preferably, only one of the viscoelastic layers is disposed between the core layer and one or both of the cover layers in order to keep the increase in weight caused by the addition of the viscoelastic layer or layers at a minimum. The cover layers may be directly attached or bonded to such a viscoelastic layer. The viscoelastic layers can be layers comprising a viscoelastic material or being composed or consisting of a viscoelastic material. In an embodiment such viscoelastic material is an elastomeric material.

As explained above, the one or more viscoelastic layers constitute damping or vibration damping layers. Preferably, they have a mechanical loss factor tan δ, as measured by dynamic-mechanical analysis, of at least 0.03 at a temperature of 25 °C. Preferable they are provided in the form of a thin film or sheet having a thickness of e.g. 0.5 mm. The viscoelastic layers may comprise or be composed or consist of an elastomeric material.

The one or more viscoelastic layers serve to improve the characteristics of the sandwich component with respect to the transmission of vibrations and structure-borne noise, and their construction and material is chosen such that this purpose is met as compared to the same sandwich component with the one or more viscoelastic layers removed.

In connection with the present invention it has been determined that due to the high pressures involved when bonding the various layers together during the production of the sandwich component particular care has to be taken that the edges or terminal ends of the walls of the core layer do not penetrate the adjacent viscoelastic layers to a significant extent or even completely punch the adjacent viscoelastic layers resulting in a direct coupling between the core layer and the cover layers. Similarly, it has been determined that the above-mentioned possible decrease in vibration absorptivity of prior art sandwich components is attributed to the fact that due to the compressive stresses experienced by the sandwich component during use the edges or terminal ends of the walls of the core layer may increasingly penetrate the adjacent viscoelastic layers and that, eventually, the viscoelastic layers may be punched completely resulting in a direct coupling between the core layer and the cover layers. As soon as this happens, the desired damping effect of the respective viscoelastic layers fails.

In view of this, the sandwich component further comprises one or more porous layers of which each is attached to one of the one or more viscoelastic layers at the side or portion of the respective viscoelastic layer facing away from that cover layer of the two cover layers between which cover layer and the core layer the respective viscoelastic layer is disposed, i.e. at the side or portion facing towards the core layer. In an embodiment each of the viscoelastic layers may be provided with such a porous layer.

Each of the above porous layers has a higher compressive strength than the respective adjacent viscoelastic layer to which it is attached, i.e. than the viscoelastic layer closest to the respective porous layer in the direction away from the core layer. It has been found that in this manner a porous layer is able to prevent penetration of the walls of the core layer into or at least through the adjacent viscoelastic layer without a significant increase of the weight of the structural sandwich component. If the porous layers are provided as separate layers or are integrated into the viscoelastic layers such that a significant portion of the respective viscoelastic layer remains between the porous layer and the cover layer of the two cover layers between which and the core layer the respective viscoelastic layer is disposed, the vibration absorptivity of the at least one viscoelastic layer is only impaired to an insignificant extent.

Preferably, at least one and preferably each of the one or more porous layers is directly attached to the respective viscoelastic layer. This does not exclude that a layer of adhesive material is disposed between the two layers.

Each of the one or more porous layers may be attached to the respective viscoelastic layer such that it is entirely separate from the viscoelastic layer. This may preferably be achieved by means of adhesive bonding, e.g. with a layer of adhesive material provided between the porous layer and the viscoelastic layer.

In the alternative each of the one or more porous layers may be attached to the respective viscoelastic layer by complete or, preferably, partial integration or embedding of the respective porous layer into the respective viscoelastic layer. In other words, in such a case the respective porous layer is impregnated by the material of the respective viscoelastic layer, which flows into or through the pores of the porous layers, thereby penetrating into the viscoelastic layer. Such attachment may be achieved, e.g., by lamination. In a preferred embodiment such attachment by at least partial integration is such that the respective porous layer is integrated into the respective viscoelastic layer such that at least 50% of the thickness of the respective viscoelastic layer is disposed between the respective porous layer and that cover layer of the two cover layers between which and said core layer the respective viscoelastic layer is disposed, preferably at least 60%, more preferably at least 70%, even more preferably at least 80%, still more preferably at least 90% and most preferably at least 95%. However, it is also possible that the attachment by at least partial integration is such that the respective porous layer is integrated into the respective viscoelastic layer such that at least 10%, preferably at least 20%, more preferably at least 30% and still more preferably at least 40% of the thickness of the respective viscoelastic layer is disposed between the respective porous layer and that cover layer of the two cover layers between which and said core layer the respective viscoelastic layer is disposed. All of the above percentage values x mean that a percentage of x% of the thickness of the respective viscoelastic layer is free or essentially free of the respective porous layer, wherein that portion of the thickness of the viscoelastic layer faces towards that cover layer of the two cover layers between which and said core layer the respective viscoelastic layer is disposed. In any case, it is preferred that a portion of the respective porous layer is not integrated into the respective viscoelastic layer, i.e. is not impregnated by the material of the viscoelastic layer, so that it extends from the viscoelastic layer at the side facing towards the core layer.

In this regard, it is also possible that some of the one more porous layers are attached as separate layers, as mentioned above, and others of the one or more porous layers are attached such that they are partially or completely integrated, as mentioned above.

In view of the above, in an exemplary embodiment the sandwich component comprises one or more porous layers of which each is disposed between the core layer and at least one of the one or more viscoelastic layers or at least a portion of one of the one or more viscoelastic layers. In other words, in that case each of these porous layers is disposed between the core layer and one or more of the viscoelastic layers or between the core layer and at least a portion of one or more of the viscoelastic layers. It should be noted that this does not mean that each porous layer is disposed between the core layer and at least a portion of one and only one viscoelastic layer. Rather, if two or more viscoelastic layers are disposed on one side of the core layer between the core layer and the respective cover layer, more than one viscoelastic layer may be disposed between a porous layer and the respective cover layer. This is in particular the case in a preferred embodiment in which the porous layer is disposed closer to the core layer than any of the viscoelastic layers on the respective side of the core layer or at least closer to the core layer than the center plane of any of the viscoelastic layers on the respective side of the core layer. However, it is in principle also possible for a porous layer to be disposed between two of the viscoelastic layers, and, e.g., a sequence of alternating viscoelastic and porous layers could be provided. Generally, each porous layer may be disposed, for example, between the core layer and an adjacent one of the viscoelastic layers such that the respective viscoelastic layer is disposed between the respective porous layer and the cover layer between which and the core layer the respective viscoelastic layer is disposed.

Consequently, in this exemplary embodiment in case of only one viscoelastic vibration damping layer porous layers and preferably only one porous layer is disposed between the viscoelastic layer or at least a portion of the viscoelastic layer and the core layer, preferably directly between these two layers. In case of one viscoelastic layer on each side of the core layer porous layers and preferably only one porous layer is disposed on each side of the core layer between the respective viscoelastic layer or at least a portion of the respective viscoelastic layer and the core layer, preferably directly between these two layers. With respect to the latter case it is to be noted that it is in principle also possible to provide only one porous layer between the core layer and at least a portion of the viscoelastic layer on one side of the core layer and to not provide a porous layer between the core layer and at least a portion of the viscoelastic layer on the other side. Use of at most only one porous layer - and preferably also at most only one viscoelastic layer - on each side ensures a minimum increase in weight due to the addition of the porous layer or layers - and the viscoelastic layer or layers. The latter aspect generally also applies to other embodiments.

In any case, one or more of the one or more porous layers or all porous layers may have lateral dimensions, i.e. dimensions perpendicularly to the thickness direction, identical or substantially identical to the corresponding dimensions of the cover layers, the viscoelastic layers and/or the core layer. However, it is also possible that one or more of the one or more porous layers or all porous layers have lateral dimensions smaller than the corresponding dimensions of the cover layers, the viscoelastic layers and/or the core layer.

In a preferred embodiment, to one or both opposing surfaces of the core layer facing towards the cover layers a porous layer of the one or more porous layers is directly attached, e.g. by adhesive bonding. This may be the case, for example, when at most one viscoelastic layer is provided on each of the two sides of the core layer, i.e. when only one viscoelastic layer is arranged on only one side of the core layer or in case on both sides of the core only one viscoelastic layer is arranged. In those cases only at most one of the porous layers at issue is disposed on the two sides of the core layer.

It is preferred that the cells of the core layer are tubular and extend through the entire thickness of the core layer. It is also preferred that the core layer comprises a honeycomb structure, such as a hexagonal honeycomb structure.

The sandwich component may also comprise a further core layer, so that the core layer constitutes a first core layer and the further core layer constitutes a second core layer, wherein the first core layer and the second core layer form or are a part of a multilayer core structure. In that case, a viscoelastic layer of the one or more viscoelastic layers is disposed between the first core layer and the second core layer, and a porous layer of the one or more porous layers is attached to the viscoelastic layer disposed between the first core layer and the second core layer. In those cases, it may further be advantageous if another porous layer is attached to the opposite side of the viscoelastic layer, i.e. at the side of the viscoelastic layer facing towards that cover layer of the two cover layers between which and said core layer the respective viscoelastic layer is disposed and in particular facing towards the second core layer, wherein the other porous layer has a higher compressive strength than the viscoelastic layer to which it is attached. Attachment may be effected as indicated above. In any case, such first and second core layers form at least a part of a single core and in effect constitute sublayers of such a single core. The viscoelastic layer and the porous layer - or layers - are then embedded into this single core and can advantageously be disposed in a region where shear forces are particularly high.

In a preferred embodiment the at least one porous layer is a fibrous layer. In that case the at least one fibrous layer may advantageously be a woven or a non-woven fibrous layer. Thus, the at least one fibrous layer may be a fabric or a fleece. A fleece is particularly simple to implement. However, it is also possible that the at least one porous layer is provided, for example, in the form of a lattice structure or mesh structure. In this regard, it may also be advantageous that one or more of the at least one porous layer are a fibrous layer of the stated types and one or more of the at least one porous layer are provided as a lattice or mesh or in another form.

In case of a fibrous layer, it is preferred that it comprises or is composed or consists of glass fibers, carbon fibers and/or polymer fibers. It is particularly preferred for it to comprise or be composed or consists of glass fibers and/or carbon fibers, preferably glass fibers.

In any case, if more than one porous layer is present, different porous layers may be of the same or of different construction and/or may comprise or consist of the same or different materials.

The cover layers may, e.g., comprise plastic material, fiber-reinforced plastic material and/or metal material, such as stainless steel or aluminum, with fiber-reinforced plastic material being preferred. Thus, they may, e.g., be laminates of glass or carbon fiber-reinforced thermoplastics or thermoset polymers. In an advantageous embodiment they are provided by prepregs. For example, one of the two cover layers may be a prepreg comprising glass fibers in a phenolic resin matrix, and the other of the two cover layers may be a glass lattice prepreg comprising phenolic resin.

The at least one viscoelastic layer may, e.g., comprise or be composed or consist of one or more polymers, in particular ethylene vinyl acetate (EVA) and/or ethylene propylene diene monomer (EPDM). Different viscoelastic layers may comprise or be composed or consist of different materials.

The at least one viscoelastic layer may include one or more additives chosen to improve the processing and/or product characteristics of the sandwich component, such as, e.g., the fire safety characteristics.

The core layer may, e.g., comprise or be composed or consist of aramid paper, which may be impregnated with phenolic resin, metal, such as aluminium, resin impregnated fibers and/or polymer material.

In a preferred embodiment the composite structural component is a sandwich panel. It is not restricted to specific shapes and dimensions. In particular, it may be planar or curved, depending on the intended application. Such a sandwich panel may be an aircraft fuselage panel, a cabin panel, another aircraft structural panel or a panel for automobile construction, railcar construction, other vehicle construction or building construction. As a cabin panel for an aircraft or a panel for railcar construction it may be part of a cabin wall or sidewall or of cladding and may, thus, constitute an interior structural component which may comprise a large area. Consequently, an aircraft, an aircraft fuselage, a cabin wall of an aircraft and an interior wall cladding of an aircraft as well as a railcar, an automobile and a building comprising one or more of the above-mentioned panels are also provided by the present invention.

A sandwich component of the above construction can be advantageously produced in a simple and reliable manner by providing two cover layers, providing a core layer, the core layer comprising a plurality of hollow cells, which are separated by walls and which extend in the thickness direction of the core layer, each cell forming an opening in at least one of the two opposing surfaces of the core layer facing the cover layers, providing at least one viscoelastic layer, forming a layered structure including disposing the core layer between the two cover layers and disposing each of the viscoelastic layers between the core layer and one of the cover layers, and applying heat and/or pressure to the layered structure in order to produce a sandwich component, e.g. by lamination.

In this process, at least one porous layer is further provided, and for each of the one or more porous layers the step of forming the layered structure further comprises one of the following two possibilities, wherein the first possibility or the second possibility is chosen for all of the one or more porous layers or the first possibility is chosen for one or more of the one or more porous layers and the second possibility is chosen for one or more of the one or more porous layers.

According to the first possibility the respective porous layer is disposed between the core layer and a respective one of the one or more viscoelastic layers, i.e. at the side of the respective viscoelastic layer facing away from that cover layer of the two cover layers between which and the core layer the respective viscoelastic layer is disposed or facing towards the core layer, preferably directly adjacent the respective viscoelastic layer. Thus, the respective porous layer is provided as a layer separate from the respective viscoelastic layer. Only during the subsequent step of applying heat and/or pressure to the layered structure the respective porous layer may in an embodiment become partially or entirely embedded into the respective viscoelastic layer, as explained above. In any case, the respective porous layer is chosen and constructed such that it has a higher compressive strength than the respective viscoelastic layer between which and the core layer it is disposed.

According to the second possibility the respective porous layer is attached to one side of one of the one or more viscoelastic layers prior to forming the layered structure. The attachment can be effected by one of the methods indicated above, i.e. the porous layer may remain separate from the viscoelastic layer or it may be partially or entirely integrated or embedded into the viscoelastic layer. Advantageously, an adhesive property of the respective viscoelastic layer can be used, which may be provided in non-vulcanized form for this purpose, and/or a lamination process may be used. The respective porous layer is chosen and constructed such that it has a higher compressive strength than the respective viscoelastic layer. Subsequently, in order to form the layered structure the respective viscoelastic layer with the attached respective porous layer is disposed between the core layer and one of the cover layers in such a manner that the side of the respective viscoelastic layer to which the respective porous layer is attached is facing away from that cover layer of the two cover layers between which and the core layer the respective viscoelastic layer is disposed, i.e. such that this side is facing towards the core layer. During the subsequent step of applying heat and/or pressure to the layered structure the respective porous layer may in an embodiment become partially or entirely embedded or become further partially or entirely embedded into the respective viscoelastic layer, as explained above.

In either of the two possibilities the respective porous layer can serve to prevent penetration or at least punching of the respective viscoelastic layer by the core layer as described above.

In a preferred embodiment one or both of the two cover layers are provided in the form of prepregs or by means of a film stacking process.

In a preferred embodiment one or more of the one or more viscoelastic layers are provided as a non-vulcanized film. Vulcanization is then effected during the step of applying heat and/or pressure. This measure can enhance or facilitate attachment of the porous layers to the viscoelastic layers.

In a preferred embodiment one or more of the one or more porous layers are provided in the form of a dry semi-finished fiber product. It may comprise fibers of the above-mentioned materials. Preferably it is a dry semi-finished fiber product.

In a preferred embodiment the step of applying heat and/or pressure to the layered structure in order to produce the sandwich component involves temperatures which are lower than the melting temperatures of the one or more porous layers at the pressures involved.

The step of applying heat and/or pressure may be part of an autoclaving or compression process.

In the following, the invention is explained in more detail for an embodiment with reference to the figures.
- Figure 1: shows, schematically and not true-to-scale, a cross-section of an embodiment of a structural sandwich component according to the invention.
- Figure 2: shows, schematically and not true-to-scale, a cross-section of a further embodiment of a structural sandwich component according to the invention.
- Figure 3: shows a comparison of global acceleration levels at first resonance of a sandwich component not comprising a viscoelastic layer and a porous layer, a sandwich component comprising a viscoelastic layer but no porous layer, and a sandwich component according to the invention comprising both a viscoelastic layer and a porous layer.
- Figure 4: illustrates, schematically and not true-to-scale, an embodiment of a method for producing the structural sandwich component shown in Figure 1.
- Figure 5: illustrates, schematically and not true-to-scale, a further embodiment of a method for producing a structural sandwich component shown in Figure 1.

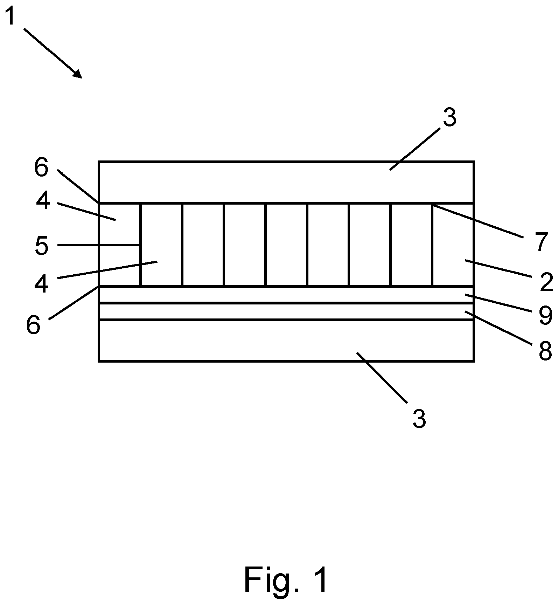

The structural sandwich component 1 shown in figure 1 is a sandwich panel and comprises a honeycomb core layer 2 which is sandwiched between two outer cover layers 3 which are thinner than the core layer 2. The honeycomb core layer 2 comprises a plurality of adjacent tubular cells or voids 4 which are separated by thin walls 5 and which extend in the thickness direction of the core layer 2 between and open into the two extended surfaces 6 of the core layer 2. Consequently, the edges or terminal ends 7 of the walls 5 form ridges or lands of wall material between which openings are disposed. In the embodiment shown both the longitudinal axis of the tubular cells 4 and the walls 5 extend essentially perpendicularly to the two parallel opposing surfaces 6 of the core layer 2.

In an exemplary embodiment one of the two cover layers 3, which - when in use, e.g., as a sandwich panel forming part of an inner cladding of a cabin of an aircraft - is intended to face outwardly towards the fuselage skin, comprises or is made of a lattice prepreg comprising glass fibers in a phenolic resin matrix and having a weight per unit area of e.g. 400 g/m², and the other cover layer 3 comprises or is made of a prepreg comprising glass fibers in a phenolic resin matrix and having a weight per unit area of e.g. 490 g/m². The core layer 2 comprises a hexagonal honeycomb structure and comprises or is made of aramid fiber paper. It may have a weight per unit area of e.g. 273 g/m².

The sandwich panel 1 further comprises a viscoelastic layer 8 which is disposed between one of the two cover layers 3 and the core layer 2. It is directly attached, bonded or laminated to the respective cover layer 3. This viscoelastic layer 8 provides for vibration damping and reduces the transmission of vibrations and structure-borne noise between the two cover layers 3 through the sandwich panel 1.

In an exemplary embodiment the viscoelastic layer 8 comprises or is made of ethylene vinyl acetate (EVA) having a weight per unit area of e.g. 780 g/m² or ethylene propylene diene monomer (EPDM) having a weight per unit area of e.g. 515 g/m².

Further, a porous layer 9, which in the example shown is a fibrous layer, preferably in the form of a glass fiber fleece, is disposed between the viscoelastic layer 8 and the core layer 2. It is directly attached, bonded or laminated to both the viscoelastic layer 8 and the core layer 2 and may be provided as a layer separate from the viscoelastic layer 8 or may be partially integrated or embedded into the viscoelastic layer 8, the material of which then impregnates a portion of the porous layer 9.

The material and construction of the fibrous layer 9 is chosen such that it comprises a higher compressive strength than the viscoelastic layer 8 adjacent to it. In an exemplary embodiment it is provided as a dry glass fiber fleece mat.

In an exemplary embodiment the fibrous layer 9 is a glass fiber fleece having a weight per unit area of e.g. 33 g/m².

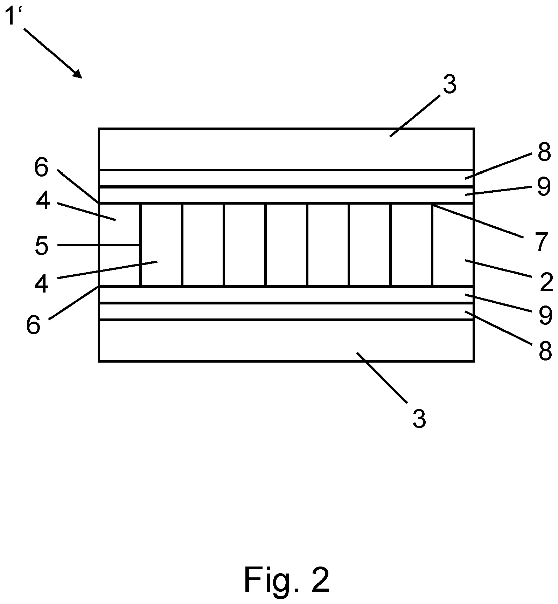

Figure 2 shows a further embodiment of a sandwich panel 1'. It differs from the sandwich panel 1 in that a further viscoelastic layer 8 is disposed on the other side of the core layer 2 between the core layer 2 and the adjacent cover layer 3, and that a further fibrous layer 9 is disposed between that further viscoelastic layer 8 and the core layer 2. The further viscoelastic layer 8 is directly attached, bonded or laminated to the adjacent cover layer 3, and the further fibrous layer 9 is directly attached, bonded or laminated to both the core layer 2 and the adjacent viscoelastic layer 8, both in the manner described with respect to Figure 1. The materials and constructions of the two viscoelastic layers 8 and the two fibrous layers 9 may be the same or different.

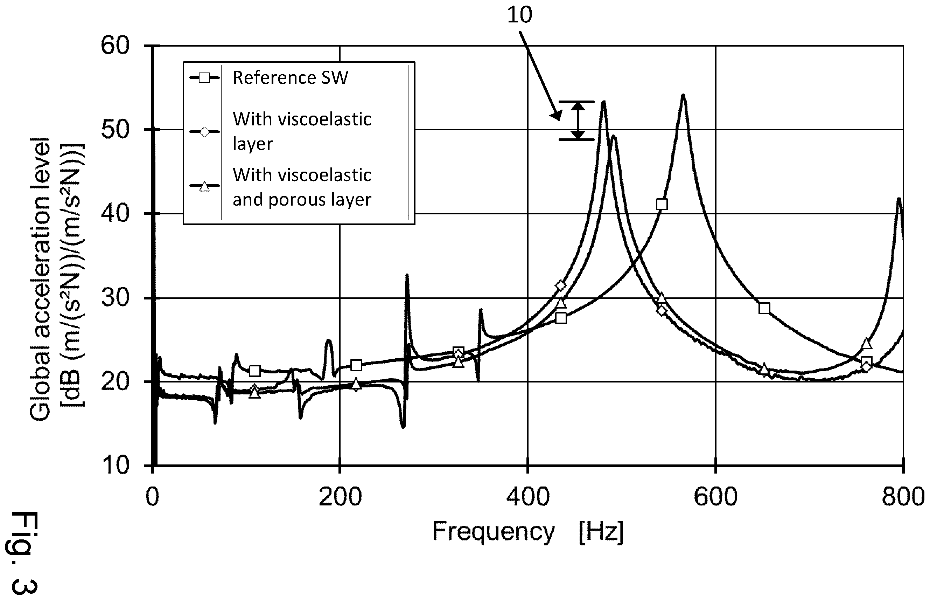

Figure 3 shows a comparison between the global acceleration levels as measured by means of a laser Doppler vibrometer as a function of excitation frequency for three different sandwich components. A prior art reference sandwich component does not include any viscoelastic or porous layer, and a further prior art sandwich component comprises a viscoelastic layer but no porous layer according to the invention. As can be seen in Figure 3, essentially no attenuation is achieved.

However, for the third sandwich component, which is constructed and was produced in accordance with the present invention and comprises a viscoelastic and a porous layer, an attenuation 10 of 5 dB is achieved.

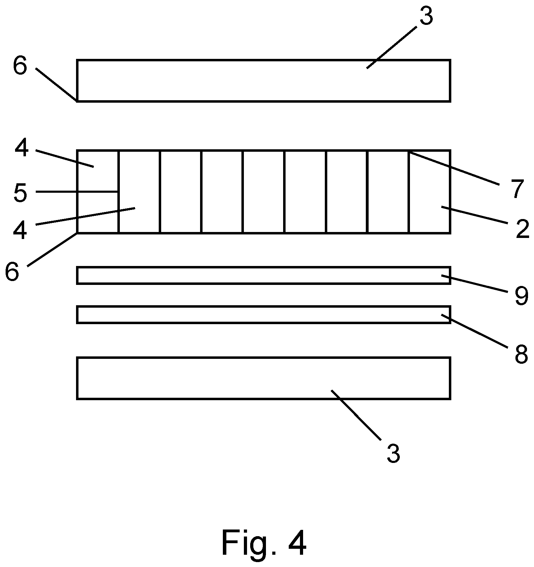

Figure 4 illustrates a method for producing the sandwich panel 1 of Figure 1. More particularly, it illustrates a step in which a layered structure is formed by disposing the core layer 2 between the two cover layers 3, disposing the viscoelastic layer 8 between the core layer 2 and one of the cover layers 3, and disposing the porous layer 9 as a layer separate from the viscoelastic layer 8 between the viscoelastic layer 8 and the core layer 2. The viscoelastic layer 8 may be provided in non-vulcanized form. The porous layer 9 may be provided as a dry glass fiber fleece mat. Subsequently heat and/or pressure are applied to the layered structure in order to produce the sandwich panel 1. A non-vulcanized viscoelastic layer 8 may preferably vulcanize during this step. The step of applying heat and/or pressure may be an autoclaving or compression process.

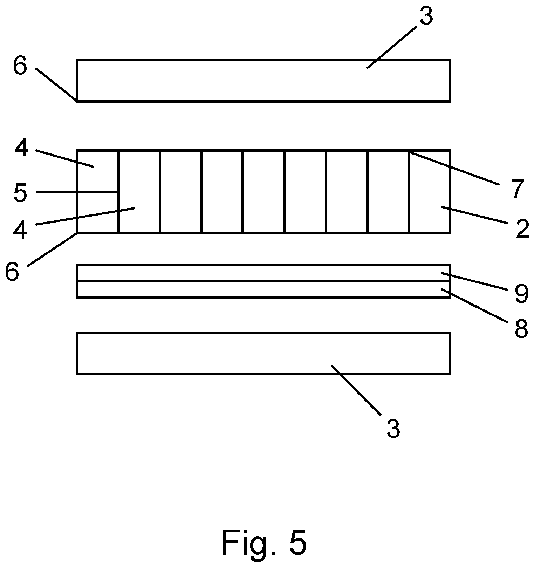

Figure 5 illustrates another method for producing the sandwich panel 1 of Figure 1. More particularly, it illustrates a step in which a layered structure is formed, which step differs from the step illustrated in Figure 4 only in that prior to forming the layered structure the porous layer 9 is attached to one side of the viscoelastic layer 8 and that forming the layered structure involves disposing the combination of the viscoelastic layer 8 and the porous layer 9 attached thereto between one of the cover layers 3 and the core layer 2 such that the side of the viscoelastic layer 8 to which the porous layer 9 is attached faces towards the core layer 2. The viscoelastic layer 8 and the porous layer 9 may take the forms mentioned above.

## Claims

1. A sandwich component comprising:
- two cover layers (3),
- a core layer (2) disposed between said cover layers (3), said core layer (2) comprising a plurality of hollow cells (4), which are separated by walls (5) and which extend in the thickness direction of said core layer (2), each cell (4) forming an opening in at least one of the two opposing surfaces (6) of said core layer (2) facing said cover layers (3), and
- at least one viscoelastic layer (8) of which each is disposed between said core layer(2) and one of said cover layers (3),
wherein said sandwich component (1) further comprises a porous layer (9) which is attached to one of said at least one viscoelastic layer (8) at the side of the respective viscoelastic layer (8) facing away from that cover layer (3) of said two cover layers (3) between which said cover layer (3) and said core layer (2) the respective viscoelastic layer (8) is disposed, wherein the porous layer (9) has a higher compressive strength than the respective viscoelastic layer (8) to which it is attached.

2. The sandwich component of claim 1, wherein the porous layer (9) is directly attached to the respective viscoelastic layer (8)
- such that it is entirely separate from the viscoelastic layer (8), preferably by means of adhesive bonding, or
- by at least partial integration of the porous layer (9) into the respective viscoelastic layer (8).

3. The sandwich component of claim 2, wherein the porous layer (9) which is directly attached to the respective viscoelastic layer (8) by at least partial integration of the porous layer (9) into the respective viscoelastic layer (8) is integrated into the respective viscoelastic layer (8) such that at least 50% of the thickness of the respective viscoelastic layer (8) is disposed between the porous layer (9) and that cover layer (3) of said two cover layers (3) between which said cover layer (3) and said core layer (2) the respective viscoelastic layer (8) is disposed.

4. The sandwich component according to any of the preceding claims, wherein the cells (4) of said core layer (2) are tubular and extend through the entire thickness of said core layer (2).

5. The sandwich component according to any of the preceding claims, wherein said core layer (2) comprises a honeycomb structure.

6. The sandwich component according to any of the preceding claims, wherein said core layer (2) is a first core layer (2) and said sandwich component (1) further comprises a second core layer, said first and second core layers being at least a part of a multilayer core structure, wherein a viscoelastic layer (8) of said at least one viscoelastic layer (8) is disposed between said first and second core layers, and wherein the porous layer (9) is attached to said viscoelastic layer (8) disposed between said first and second core layers.

7. The sandwich component according to any of the preceding claims, wherein the porous layer (9) is a woven or a non-woven fibrous layer, preferably a fibrous layer which comprises glass fibers, carbon fiber and/or polymer fibers.

8. The sandwich component according to any of the preceding claims, wherein said cover layers (3) comprise plastic material, fiber-reinforced plastic material and/or metal material.

9. The sandwich component according to any of the preceding claims, wherein said at least one viscoelastic layer (8) comprises a polymer, in particular ethylene vinyl acetate (EVA) and/or ethylene propylene diene monomer (EPDM).

10. The sandwich component according to any of the preceding claims, wherein said sandwich component (1) is a sandwich panel, an aircraft fuselage or cabin panel or another aircraft structural panel.

11. An inner wall cladding or an aircraft comprising a sandwich component (1) according to any of the preceding claims.

12. A method of producing a sandwich component (1) according to any of claims 1 to 10 comprising the following steps:
- providing two cover layers (3),
- providing a core layer (2), said core layer (2) comprising a plurality of hollow cells (4), which are separated by walls (5) and which extend in the thickness direction of said core layer (2), each cell (4) forming an opening in at least one of the two opposing surfaces (6) of said core layer (2) facing the cover layers (3),
- providing at least one viscoelastic layer (8),
- forming a layered structure including disposing said core layer (2) between said two cover layers (3) and disposing each of said at least one viscoelastic layer (8) between said core layer (2) and one of said cover layers (3), and
- applying heat and/or pressure to said layered structure in order to produce a sandwich component (1),
wherein
- the method further comprises providing a porous layer (9) and
- the step of forming said layered structure further comprises for the porous layer (9)
- disposing the porous layer (9) between said core layer (2) and one of said at least one viscoelastic layer (8) at the side of the respective viscoelastic layer (8) facing away from that cover layer (3) of said two cover layers (3) between which said cover layer (3) and said core layer (2) the respective viscoelastic layer (8) is disposed, wherein the porous layer (9) has a higher compressive strength than the respective viscoelastic layer (8) between which and said core layer (2) it is disposed, or
- attaching the porous layer (9) to one side of one of said at least one viscoelastic layer (8) prior to forming said layered structure, wherein the porous layer (9) has a higher compressive strength than the respective viscoelastic layer (8) to which the porous layer (9) is attached, and wherein upon forming the layered structure the respective viscoelastic layer (8) with the attached porous layer (9) is disposed between said core layer (2) and one of said cover layers (3) in such a manner that the side of the respective viscoelastic layer (8) to which the porous layer (9) is attached is facing away from that cover layer (3) of said two cover layers (3) between which said cover layer (3) and said core layer (2) the respective viscoelastic layer (8) is disposed.

13. The method according to claim 12, wherein said two cover layers (3) are provided in the form of prepregs and/or said at least one viscoelastic layer (8) is provided as a non-vulcanized film.

14. The method according to claim 12 or claim 13, wherein the porous layer (9) is provided in the form of a dry semi-finished fiber product.

15. The method according to any of claims 12 to 14, wherein the step of applying heat and/or pressure to said layered structure in order to produce said sandwich component (1) involves temperatures which are lower than the melting temperature of the porous layer (9) at the pressure applied.

## Patentansprüche

1. Sandwichkomponente, umfassend:
- zwei Deckschichten (3),
- eine Kernschicht (2), die zwischen den Deckschichten (3) angeordnet ist, wobei die Kernschicht (2) eine Vielzahl von hohlen Zellen (4) umfasst, die von Wänden (5) getrennt sind und die in der Dickenrichtung der Kernschicht (2) verlaufen, wobei jede Zelle (4) eine Öffnung in wenigstens einer der beiden gegenüberliegenden Oberflächen (6) der Kernschicht (2), die zu den Deckschichten (3) zeigen, bildet, und
- wenigstens eine viskoelastische Schicht (8), wovon jede zwischen der Kernschicht (2) und einer der Deckschichten (3) angeordnet ist,
wobei die Sandwichkomponente (1) ferner eine poröse Schicht (9) umfasst, die an einer der wenigstens einen viskoelastischen Schicht (8) an der Seite der entsprechenden viskoelastischen Schicht (8) angebracht ist, die von der Deckschicht (3) der beiden Deckschichten (3), zwischen welcher Deckschicht (3) und der Kernschicht (2) die entsprechende viskoelastische Schicht (8) angeordnet ist, weg zeigt, wobei die poröse Schicht (9) eine höhere Kompressionsfestigkeit als die entsprechende viskoelastische Schicht (8), an der sie angebracht ist, aufweist.

2. Sandwichkomponente gemäß Anspruch 1, wobei die poröse Schicht (9) direkt an der entsprechenden viskoelastischen Schicht (8) angebracht ist,
- so dass sie von der viskoelastischen Schicht (8) vollkommen getrennt ist, vorzugsweise mithilfe von Klebstoffbindung, oder
- durch wenigstens teilweise Integration der porösen Schicht (9) in die entsprechende viskoelastische Schicht (8).

3. Sandwichkomponente gemäß Anspruch 2, wobei die poröse Schicht (9), die durch wenigstens teilweise Integration der porösen Schicht (9) in die entsprechende viskoelastische Schicht (8) direkt an der entsprechenden viskoelastischen Schicht (8) angebracht ist, so in die entsprechende viskoelastische Schicht (8) integriert ist, dass wenigstens 50 % der Dicke der entsprechenden viskoelastischen Schicht (8) zwischen der porösen Schicht (9) und der Deckschicht (3) der beiden Deckschichten (3) angeordnet ist, zwischen welcher Deckschicht (3) und der Kernschicht (2) die entsprechende viskoelastische Schicht (8) angeordnet ist.

4. Sandwichkomponente gemäß einem der vorstehenden Ansprüche, wobei die Zellen (4) der Kernschicht (2) rohrförmig sind und durch die gesamte Dicke der Kernschicht (2) verlaufen.

5. Sandwichkomponente gemäß einem der vorstehenden Ansprüche, wobei die Kernschicht (2) eine Wabenstruktur umfasst.

6. Sandwichkomponente gemäß einem der vorstehenden Ansprüche, wobei die Kernschicht (2) eine erste Kernschicht (2) ist und die Sandwichkomponente (1) ferner eine zweite Kernschicht umfasst, wobei die erste und die zweite Kernschicht wenigstens ein Teil einer mehrschichtigen Kernstruktur sind, wobei eine viskoelastische Schicht (8) der wenigstens einen viskoelastischen Schicht (8) zwischen der ersten und der zweiten Kernschicht angeordnet ist und wobei die poröse Schicht (9) an der viskoelastischen Schicht (8) angebracht ist, die zwischen der ersten und der zweiten Kernschicht angeordnet ist.

7. Sandwichkomponente gemäß einem der vorstehenden Ansprüche, wobei die poröse Schicht (9) eine gewebte oder nichtgewebte Faserschicht ist, vorzugsweise eine Faserschicht, die Glasfasern, Kohlenstofffasern und/oder Polymerfasern umfasst.

8. Sandwichkomponente gemäß einem der vorstehenden Ansprüche, wobei die Deckschichten (3) Kunststoffmaterial, faserverstärktes Kunststoffmaterial und/oder Metallmaterial umfassen.

9. Sandwichkomponente gemäß einem der vorstehenden Ansprüche, wobei die wenigstens eine viskoelastische Schicht (8) ein Polymer, insbesondere Ethylenvinylacetat (EVA) und/oder Ethylen-Propylen-Dien-Monomer (EPDM), umfasst.

10. Sandwichkomponente gemäß einem der vorstehenden Ansprüche, wobei die Sandwichkomponente (1) eine Sandwichplatte, ein(e) Luftfahrzeug-Rumpfelement oder -Kabinenplatte oder eine andere Luftfahrzeug-Strukturplatte ist.

11. Innenwandverkleidung oder Luftfahrzeug, umfassend eine Sandwichkomponente (1) gemäß einem der vorstehenden Ansprüche.

12. Verfahren zur Herstellung einer Sandwichkomponente (1) gemäß einem der Ansprüche 1 bis 10, umfassend die folgenden Schritte:
- Bereitstellen von zwei Deckschichten (3),
- Bereitstellen einer Kernschicht (2), wobei die Kernschicht (2) eine Vielzahl von hohlen Zellen (4) umfasst, die von Wänden (5) getrennt sind und die in der Dickenrichtung der Kernschicht (2) verlaufen, wobei jede Zelle (4) eine Öffnung in wenigstens einer der beiden gegenüberliegenden Oberflächen (6) der Kernschicht (2), die zu den Deckschichten (3) zeigen, bildet,
- Bereitstellen wenigstens einer viskoelastischen Schicht (8),
- Bilden einer Schichtstruktur, einschließlich Anordnen der Kernschicht (2) zwischen den beiden Deckschichten (3) und Anordnen jeder von der wenigstens einen viskoelastischen Schicht (8) zwischen der Kernschicht (2) und einer der Deckschichten (3), und
- Anwenden von Wärme und/oder Druck an die Schichtstruktur, um eine Sandwichkomponente (1) zu erzeugen,
wobei
- das Verfahren ferner Bereitstellen einer porösen Schicht (9) umfasst und
- der Schritt des Bildens der Schichtstruktur ferner für die poröse Schicht (9) umfasst:
- Anordnen der porösen Schicht (9) zwischen der Kernschicht (2) und einer der wenigstens einen viskoelastischen Schicht (8) an der Seite der entsprechenden viskoelastischen Schicht (8), die von der Deckschicht (3) der beiden Deckschichten (3), zwischen welcher Deckschicht (3) und der Kernschicht (2) die entsprechende viskoelastische Schicht (8) angeordnet ist, weg zeigt, wobei die poröse Schicht (9) eine höhere Kompressionsfestigkeit als die entsprechende viskoelastische Schicht (8), zwischen der und der Kernschicht (2) sie angeordnet ist, aufweist, oder
- Anbringen der porösen Schicht (9) an eine Seite einer der wenigstens einen viskoelastischen Schicht (8) vor dem Bilden der Schichtstruktur, wobei die poröse Schicht (9) eine höhere Kompressionsfestigkeit als die entsprechende viskoelastische Schicht (8), an der die poröse Schicht (9) angebracht ist, aufweist, und wobei nach dem Bilden der Schichtstruktur die entsprechende viskoelastische Schichte (8) mit der daran angebrachten porösen Schicht (9) so zwischen der Kernschicht (2) und einer der Deckschichten (3) angeordnet ist, dass die Seite der entsprechenden viskoelastischen Schicht (8), an der die poröse Schicht (9) angebracht ist, von der Deckschicht (3) der beiden Deckschichten (3), zwischen welcher Deckschicht (3) und der Kernschicht (2) die entsprechende viskoelastische Schicht (8) angeordnet ist, weg zeigt.

13. Verfahren gemäß Anspruch 12, wobei die beiden Deckschichten (3) in der Form von Prepregs bereitgestellt werden und/oder die wenigstens eine viskoelastische Schicht (8) als nichtvulkanisierter Film bereitgestellt wird.

14. Verfahren gemäß Anspruch 12 oder Anspruch 13, wobei die poröse Schicht (9) in der Form eines trockenen halbfertigen Faserprodukts bereitgestellt wird.

15. Verfahren gemäß einem der Ansprüche 12 bis 14, wobei der Schritt des Anwendens von Wärme und/oder Druck an die Schichtstruktur zum Erzeugen der Sandwichkomponente (1) Temperaturen umfasst, die niedriger sind als die Schmelztemperatur der porösen Schicht (9) bei dem angewendeten Druck.

## Revendications

1. Composant sandwich comprenant :
- deux couches de revêtement (3),
- une couche centrale (2) disposée entre lesdites couches de revêtement (3), ladite couche centrale (2) comprenant une pluralité de cellules creuses (4), qui sont séparées par des parois (5) et qui s'étendent dans la direction de l'épaisseur de ladite couche centrale (2), chaque cellule (4) formant une ouverture dans au moins une des deux surfaces opposées (6) de ladite couche centrale (2) faisant face auxdites couches de revêtement (3), et
- au moins une couche viscoélastique (8) dont chacune est disposée entre ladite couche centrale (2) et une desdites couches de revêtement (3),
ledit composant sandwich (1) comprenant en outre une couche poreuse (9) qui est fixée à une de ladite au moins une couche viscoélastique (8) sur le côté de la couche viscoélastique respective (8) tournant le dos à la couche de revêtement (3) desdites deux couches de revêtement (3) entre laquelle dite couche de revêtement (3) et ladite couche centrale (12) la couche viscoélastique respective (8) est disposée, la couche poreuse (9) ayant une plus grande résistance à la compression que la couche viscoélastique respective (8) à laquelle elle est fixée.

2. Composant sandwich de la revendication 1, dans lequel la couche poreuse (9) est directement fixée à la couche viscoélastique respective (8)
- de telle sorte qu'elle est entièrement séparée de la couche viscoélastique (8), de préférence au moyen d'un collage par adhésif, ou
- par intégration au moins partielle de la couche poreuse (9) dans la couche viscoélastique respective (8).

3. Composant sandwich de la revendication 2, dans lequel la couche poreuse (9) qui est directement fixée à la couche viscoélastique respective (8) par intégration au moins partielle de la couche poreuse (9) dans la couche viscoélastique respective (8) est intégrée dans la couche viscoélastique respective (8) de telle sorte qu'au moins 50 % de l'épaisseur de la couche viscoélastique respective (8) est disposée entre la couche poreuse (9) et la couche de revêtement (3) desdites deux couches de revêtement (3) entre laquelle dite couche de revêtement (3) et ladite couche centrale (2) la couche viscoélastique respective (8) est disposée.

4. Composant sandwich selon l'une quelconque des revendications précédentes, dans lequel les cellules (4) de ladite couche centrale (2) sont tubulaires et s'étendent à travers l'épaisseur entière de ladite couche centrale (2).

5. Composant sandwich selon l'une quelconque des revendications précédentes, dans lequel ladite couche centrale (2) comprend une structure en nid d'abeilles.

6. Composant sandwich selon l'une quelconque des revendications précédentes, ladite couche centrale (2) étant une première couche centrale (2) et ledit composant sandwich (1) comprenant en outre une deuxième couche centrale, lesdites première et deuxième couches centrales constituant au moins une partie d'une structure centrale multicouche, une couche viscoélastique (8) de ladite au moins une couche viscoélastique (8) étant disposée entre lesdites première et deuxième couches centrales, et la couche poreuse (9) étant fixée à ladite couche viscoélastique (8) disposée entre lesdites première et deuxième couches centrales.

7. Composant sandwich selon l'une quelconque des revendications précédentes, dans lequel la couche poreuse (9) est une couche fibreuse tissée ou non tissée, de préférence une couche fibreuse qui comprend des fibres de verre, de la fibre de carbone et/ou des fibres polymères.

8. Composant sandwich selon l'une quelconque des revendications précédentes, dans lequel lesdites couches de revêtement (3) comprennent un matériau plastique, un matériau plastique renforcé de fibres et/ou un matériau métallique.

9. Composant sandwich selon l'une quelconque des revendications précédentes, dans lequel ladite au moins une couche viscoélastique (8) comprend un polymère, en particulier de l'éthylène-acétate de vinyle (EVA) et/ou de l'éthylène-propylène-diène monomère (EPDM).

10. Composant sandwich selon l'une quelconque des revendications précédentes, ledit composant sandwich (1) étant un panneau sandwich, un fuselage ou panneau de cabine d'aéronef ou un autre panneau de structure d'aéronef.

11. Cloison interne ou aéronef comprenant un composant sandwich (1) selon l'une quelconque des revendications précédentes.

12. Procédé de production d'un composant sandwich (1) selon l'une quelconque des revendications 1 à 10 comprenant les étapes suivantes :
- obtention de deux couches de revêtement (3),
- obtention d'une couche centrale (2), ladite couche centrale (2) comprenant une pluralité de cellules creuses (4), qui sont séparées par des parois (5) et qui s'étendent dans la direction de l'épaisseur de ladite couche centrale (2), chaque cellule (4) formant une ouverture dans au moins une des deux surfaces opposées (6) de ladite couche centrale (2) faisant face aux couches de revêtement (3),
- obtention d'au moins une couche viscoélastique (8),
- formation d'une structure stratifiée comportant la mise en place de ladite couche centrale (2) entre lesdites deux couches de revêtement (3) et la mise en place de chacune de ladite au moins une couche viscoélastique (8) entre ladite couche centrale (2) et une desdites couches de revêtement (3), et
- application de chaleur et/ou de pression à ladite structure stratifiée afin de produire un composant sandwich (1),
dans lequel
- le procédé comprend en outre l'obtention d'une couche poreuse (9) et
- l'étape de formation de ladite structure stratifiée comprend en outre, pour la couche poreuse (9),
- la mise en place de la couche poreuse (9) entre ladite couche centrale (2) et une de ladite au moins une couche viscoélastique (8) sur le côté de la couche viscoélastique respective (8) tournant le dos à la couche de revêtement (3) desdites deux couches de revêtement (3) entre laquelle dite couche de revêtement (3) et ladite couche centrale (2) la couche viscoélastique respective (8) est disposée, la couche poreuse (9) ayant une plus grande résistance à la compression que la couche viscoélastique respective (8) entre laquelle et ladite couche centrale (2) elle est disposée, ou
- la fixation de la couche poreuse (9) à un côté d'une de ladite au moins une couche viscoélastique (8) avant la formation de ladite structure stratifiée, la couche poreuse (9) ayant une plus grande résistance à la compression que la couche viscoélastique respective (8) à laquelle la couche poreuse (9) est fixée, et dans lequel, lors de la formation de la structure stratifiée, la couche viscoélastique respective (8) avec la couche poreuse fixée (9) est disposée entre ladite couche centrale (2) et une desdites couches de revêtement (3) de manière à ce que le côté de la couche viscoélastique respective (8) auquel la couche poreuse (9) est fixée tourne le dos à la couche de revêtement (3) desdites deux couches de revêtement (3) entre laquelle dite couche de revêtement (3) et ladite couche centrale (2) la couche viscoélastique respective (8) est disposée.

13. Procédé selon la revendication 12, dans lequel lesdites deux couches de revêtement (3) sont obtenues sous la forme de préimprégnés et/ou ladite au moins une couche viscoélastique (8) est obtenue sous la forme d'un film non vulcanisé.

14. Procédé selon la revendication 12 ou la revendication 13, dans lequel la couche poreuse (9) est obtenue sous la forme d'un produit fibreux semi-fini sec.

15. Procédé selon l'une quelconque des revendications 12 à 14, dans lequel l'étape d'application de chaleur et/ou de pression à ladite structure stratifiée afin de produire ledit composant sandwich (1) implique des températures qui sont inférieures à la température de fusion de la couche poreuse (9) à la pression appliquée.
